# EUROPÄISCHE PATENTANMELDUNG

(11) **EP 1 182 425 A1**
(43) Veröffentlichungstag der Anmeldung: **27.02.2002**
(21) Anmeldenummer: 01119025.3
(22) Anmeldetag: 07.08.2001
(51) Int. Cl.: G01B 11/06, H01L 21/66, G01N 21/55

(54) **Materialprüfvorrichtung und deren Verwendung**

(30) Priorität: 26.08.2000 DE 10042003
(71) Anmelder: ROBERT BOSCH GMBH, 70442 Stuttgart (DE)
(72) Erfinder: Strink, Peter, 70839 Gerlingen (DE)

(57) **Zusammenfassung**

Es wird eine Prüfvorrichtung (5) zur Bestimmung oder Identifikation des Materials einer Prüffläche (22) vorgeschlagen. Die vorgeschlagene Prüfvorrichtung (5) weist dazu eine Lichtquelle (10), ein optisches Spektrometer (13) und eine Auswerteeinheit (14) auf, wobei von der Lichtquelle (10) auf die Prüffläche (22) einfallendes und von dieser reflektiertes Licht mit Hilfe des optischen Spektrometers (13) zumindest teilweise und/oder in einem vorgegebenen Wellenlängenbereich detektiert, und mittels der Auswerteeinheit (14) hinsichtlich des Materials der Prüffläche (22) analysiert wird. Die vorgeschlagene Prüfvorrichtung (5) eignet sich besonders zur Unterscheidung der Materialien Gold, Aluminium, Nickel, Silber oder Zinn auf Steckkontakten (21) oder Anschlusskontaktflächen, beispielsweise von Sensoren, Zündkerzen oder Steckern (20).

## Beschreibung

Die Erfindung betrifft eine Vorrichtung zur Bestimmung oder Identifikation des Materials einer Prüffläche nach der Gattung des Hauptanspruches, sowie deren Verwendung.

### Stand der Technik

Bekannte Standardverfahren zur Identifikation des Materials einer Prüffläche sind zerstörend. So werden bei der elektrochemischen Analyse oder der Funkenerosionsspektroskopie zwar jeweils nur kleine Bereiche der zu prüfenden Oberfläche beschädigt, dies ist jedoch im Fall der Analyse der Oberfläche von Steckkontakten oder Anschlusskontaktflächen von beispielsweise Sensoren oder Steckern nicht vernachlässigbar, da sich in diesem Fall die zerstörende Prüfung auf einen für die Funktion dieser Bauteile besonders relevanten Bereich erstreckt. Weiter sind diese Verfahren auch bei Bauteilen bzw. zu prüfenden Oberflächen von geringer Größe oder Prüfoberflächen, die nur schwer zugänglich sind, vielfach nicht anwendbar.

Weitere Verfahren zur Prüfung der Zusammensetzung einer Oberfläche beruhen auf dem thermoelektrischen Prinzip. Dabei werden die zu untersuchenden Prüfflächen heiß und kalt kontaktiert, und die resultierende, vom Beschichtungsmaterial abhängige Thermospannung gemessen. Analysevorrichtungen nach dem thermoelektrischen Prinzip arbeiten zwar quasi zerstörungsfrei, es kommt jedoch bei der unvermeidbaren Kontaktierung zu Ablagerungen an den zu untersuchenden Oberflächen bzw. Kontakten, so dass auch eine solche Vorrichtung in der Routinekontrolle von Oberflächen nur eingeschränkt einsetzbar ist.

Das einzige zerstörungsfreie und zugleich berührungslose Messverfahren, dass bisher in der Materialerkennung eingesetzt wird, ist die Röntgenfluororeszenzanalyse, die aber mit einem relativ hohen apparativen Aufwand und umfangreichen Schutzvorkehrungen vor der auftretenden Röntgenstrahlung verbunden ist.

Aufgabe der vorliegenden Erfindung war die Bereitstellung einer Vorrichtung mit der zerstörungsfrei, berührungslos und gleichzeitig routinemäßig auch an schwer zugänglichen und kleinen Oberflächen eine Materialprüfung bzw. Materialidentifikation vorgenommen werden kann.

### Vorteile der Erfindung

Die erfindungsgemäße Vorrichtung hat gegenüber dem Stand der Technik den Vorteil, dass es zu keiner Zerstörung bzw. Beeinträchtigung der zu analysierenden Prüffläche kommt. Weiter ist die vorgeschlagene Vorrichtung robust und auch in der Serienfertigung ohne großen Investitionsaufwand oder apparativen Aufwand einsetzbar. Insofern ist die erfindungsgemäße Vorrichtung kostengünstig, und sie ermöglicht zudem eine 100%ige Prüfung aller zu prüfenden Bauteile, d.h. man muss sich nicht auf stichprobenartige Prüfungen beschränken.

Ein weiterer Vorteil der erfindungsgemäßen Vorrichtung ist die sehr kurze Messzeit, die typischerweise unterhalb von 200 msek. liegt, und die Tatsache, dass das Messergebnis sofort ohne aufwendige Auswerteverfahren vorliegt. Weiterhin ist vorteilhaft, dass die erfindungsgemäße Vorrichtung ohne bewegte Teile auskommt und problemlos voll in bestehende Fertigungslinien integrierbar ist. Weiter ist auch keine Kalibrierung erforderlich, und es bestehen nahezu keine Einschränkungen hinsichtlich der Größe und der Anforderungen an die Zugänglichkeit der Prüffläche, da selbst bei schwer zugänglichen Prüfflächen lediglich eine entsprechend angepasste Sonde eingesetzt werden muss. Insofern ist die erfindungsgemäße Vorrichtung zur Unterscheidung der Materialien auf Steckkontakten oder Anschlussflächen einer großen Vielzahl von Sensoren oder Steckern einsetzbar.

Vorteilhafte Weiterbildungen der Erfindung ergeben sich aus den in den Unteransprüchen genannten Maßnahmen.

So ist besonders vorteilhaft, wenn eine Sonde vorgesehen ist, die einerseits mit einem Lichtleiter oder einem Lichtleiterbündel mit der Lichtquelle und andererseits mit einem Lichtleiter oder einem Lichtleiterbündel mit dem optischen Spektrometer verbunden ist. Auf diese Weise kann über die Sonde das eingestrahlte Licht in besonders einfacher Weise und gleichzeitig mit hoher Intensität auch an unzugängliche Bereiche oder kleine Prüfflächen hingeführt werden.

Weiter ist vorteilhaft, wenn die eingesetzte Lichtquelle ein breitbandiges Emissionsspektrum hat, und besonders auch im UV-Bereich ab einer Wellenlänge von 200 nm möglichst viel Licht emittiert. In diesem Fall ist mit Hilfe des optischen Spektrometers ein großer Wellenlängenbereich, insbesondere von 250 nm bis 700 nm, analysierbar.

Da als Beschichtungsmaterialien auf Steckkontakten oder Anschlusskontaktflächen vor allem Gold, Silber oder Zinn eingesetzt werden, ist vorteilhaft, dass sich diese Materialien in dem Wellenlängenbereich um 300 nm bzw. von 400 nm bis 550 nm in ihrem Reflexionsvermögen deutlich unterscheiden, so dass bei einem Auftrag der Intensität des von der Prüffläche reflektierten Lichtes als Funktion der Wellenlänge in dem Bereich von 250 nm bis 700 nm die Identifikation der Materialien Gold, Silber oder Zinn zuverlässig und einfach möglich ist. Weiter eignet sich die erfindungsgemäße Vorrichtung auch zur Identifikation von Aluminium oder Nikkel, beispielsweise bei vernickelten Aluminiumkontakten, oder auch zur Erkennung von Zündkerzenelektrodenmaterialien.

### Zeichnung

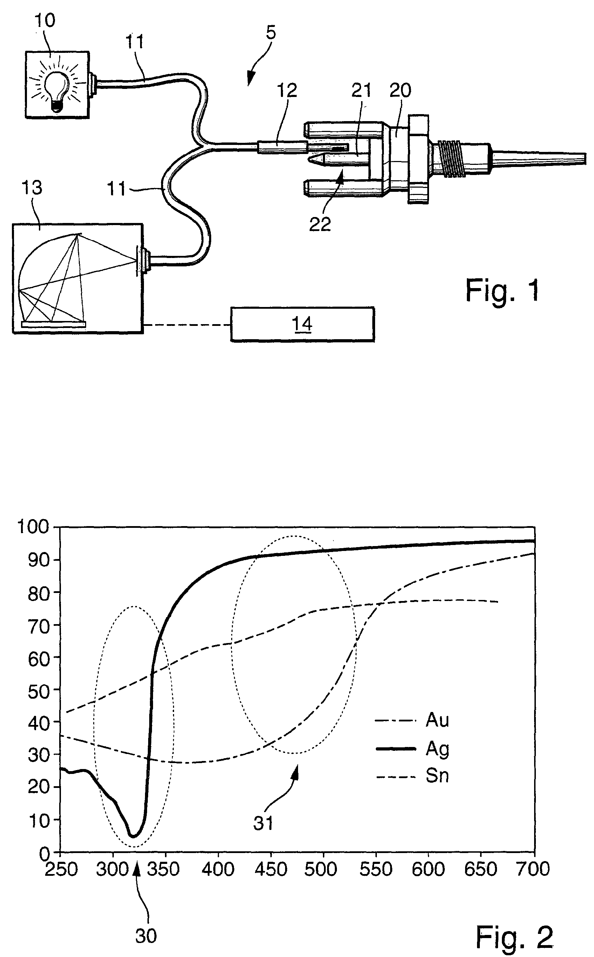

Die Erfindung wird anhand der Zeichnungen und in der nachfolgenden Beschreibung näher erläutert. Die Figur 1 zeigt eine Prinzipskizze einer Prüfvorrichtung, die Figur 2 zeigt ein von dem optischen Spektrometer im Wellenlängenbereich von 250 nm bis 700 nm aufgenommenes Spektrum des Reflexionsvermögens [%].

### Ausführungsbeispiele

Gold, Silber und Zinn unterscheiden sich wesentlich in ihrem spektralen Reflexionsvermögen. So reflektiert Gold beispielsweise blau-grünes Licht schlecht und hat daher die typisch rötlich-gelbe Farbe. Silber und Zinn hingegen zeigen im sichtbaren Frequenzbereich beide eine silbrig-metallische Farbe, unterscheiden sich jedoch deutlich im ultravioletten Spektralbereich. So fällt bei einer Wellenlänge von etwa 320 nm das Reflexionsvermögen von Silber nahezu auf null, während sich das Reflexionsvermögen von Zinn dort nicht signifikant ändert. Dieser Effekt wird bei der nachfolgend beschriebenen Vorrichtung zur Unterscheidung von Silber und Zinn ausgenutzt. Für die Erkennung von Gold und die Unterscheidung von Gold gegenüber Silber oder Zinn wird der Spektralbereich von 400 nm bis 500 nm eingesetzt.

In Figur 1 ist schematisch eine Prüfvorrichtung 5 dargestellt, bei der eine Deuteriumdampf-Lampe als Lichtquelle 10 dient. Diese Lichtquelle 10 erzeugt zunächst ein breitbandiges Spektrum, das über spezielle, UV-transparente Lichtleiter 11 oder entsprechende Lichtleiterbündel zu der zu prüfenden Oberfläche hingeleitet wird. Im erläuterten Beispiel ist die zu prüfende Oberfläche eine Oberflächenbeschichtung 22 einer Steckverbindung 21, beispielsweise eine Flachstekkerzunge oder ein Steckverbinder, in einem Stecker 20, beispielsweise für einen Temperaturfühler in einem Kraftfahrzeug. Das Ende des Lichtleiters 11 wird im erläuterten Ausführungsbeispiel von einer Sonde 12 gebildet, die das Licht zu der Oberflächenbeschichtung 22 im Inneren des Steckers 20 leitet. Dort tritt das von der Lichtquelle 10 erzeugte Licht über einen kleinen, im Winkel von 45° in der Sonde 12 montierten Umlenkspiegel unter einem Winkel von 90° aus der Sonde 12 aus, und fällt somit weitgehend senkrecht auf die Oberflächenbeschichtung 22. Das von der Oberflächenbeschichtung 22 und damit vom Beschichtungsmaterial reflektierte Licht wird dann im Weiteren über einen zweiten Lichtleiter 11, beispielsweise ein zweites Glasfaserbündel, zu einem optischen Spektrometer 13 geleitet.

Eine bevorzugte Ausführungsform der Erfindung sieht vor, dass die Lichtleiter 11 jeweils aus einer Vielzahl von einzelnen Glasfasern bestehen, die in der Sonde 12 statistisch gemischt enden, so dass stets eine optimale Lichtausbeute im optischen Spektrometer 13 gewährleistet ist. Das optische Spektrometer 13 kann im erläuterten Beispiel ein einfaches optisches Spektrometer sein, dass beispielsweise mit einem Computer als Auswerteeinheit 14 in Verbindung steht. Das Spektrometer 13 dient der Aufnahme von Reflexionsspektren, d.h. der Aufnahme des Reflexionsvermögens der Oberflächenbeschichtung 22 als Prüffläche als Funktion der Wellenlänge, im Bereich von 250 nm bis 700 nm.

Die Figur 2 zeigt drei mit dem optischen Spektrometer 13 aufgenommene Spektren als Funktion der Wellenlänge im Bereich von 250 nm bis 700 nm, wobei das Reflexionsvermögen der Oberflächenbeschichtung 22 als Prüffläche aufgetragen ist. Im Einzelnen sind in Figur 2 drei Spektren für die Materialien Gold, Silber und Zinn als Oberflächenbeschichtung 22 zusammengefasst. Anhand des relativen Verlaufs dieser drei Spektren ist klar ersichtlich, und mit der Auswerteeinheit 14 in einfacher Weise bestimmbar, welches der drei Beschichtungsmaterialien Gold, Silber oder Zinn vorliegt. So wird durch die Auswerteeinheit 14 in einem ersten Bereich 30 von ca. 300 nm bis 350 nm die Identifikation von Silber gegenüber Zinn oder Gold vorgenommen. Diese Identifikation erfolgt insbesondere durch den großen Anstieg des Reflexionsvermögens in diesem Wellenlängenbereich. Liegt kein Silber vor, wird weiter dann über die Änderung des Reflexionsvermögens im Wellenlängenbereich von 400 nm bis 500 nm, der in Figur 2 als zweiter Bereich 31 gekennzeichnet ist, Gold von Zinn unterschieden. Insbesondere weist Gold in diesem Längenwellenbereich eine deutlich größere Änderung des Reflexionsvermögens als Funktion der Wellenlänge auf als Zinn.

Die Auswertung der relativen Verläufe der Reflexionsspektren macht im Übrigen die vorgeschlagene Prüfvorrichtung 5 und das eingesetzte Verfahren unabhängig von der Oberflächenrauhigkeit der Oberflächenbeschichtung 22, die zwischen einzelnen Chargen von Steckern bzw. Sonden stark variieren kann. Weiterhin spielen auch leichte Verunreinigungen der zu prüfenden Oberfläche keine Rolle. Zudem sei betont, dass die erläuterte Prüfvorrichtung 5 auch zur Unterscheidung von anderen Metallen geeignet ist.

## Patentansprüche

1. Vorrichtung zur Bestimmung oder Identifikation des Materials einer Prüffläche (22) mit einer Lichtquelle (10), einem optischen Spektrometer (13) und einer Auswerteeinheit (14), wobei von der Lichtquelle (10) auf die Prüffläche (22) einfallendes und von dieser reflektiertes Licht mittels des optischen Spektrometers (13) zumindest teilweise und/oder in einem vorgegebenen Wellenlängenbereich detektierbar und mittels der Auswerteeinheit (14) hinsichtlich des Materials der Prüffläche (22) analysierbar ist.

2. Vorrichtung nach Anspruch 1, **dadurch gekennzeichnet, dass** ein Lichtleiter (11) oder ein Lichtleiterbündel und eine mit dem Lichtleiter (11) oder dem Lichtleiterbündel in Verbindung stehende Sonde (12) vorgesehen ist, mit der zumindest ein Teil des von der Lichtquelle (10) emittierten Lichtes an den Ort der Prüffläche (22) hinführbar ist.

3. Vorrichtung nach Anspruch 1 oder 2, **dadurch gekennzeichnet, dass** eine mit einem Lichtleiter (11) oder dem Lichtleiterbündel in Verbindung stehende Sonde (12) vorgesehen ist, mit der das von der Prüffläche (22) reflektierte Licht zumindest teilweise und/oder zumindest in einem vorgegebenen Wellenlängenbereich zu dem optischen Spektrometer (13) hinführbar ist.

4. Vorrichtung nach Anspruch 2 und 3, **dadurch gekennzeichnet, dass** mit der Sonde (12) und mit dem Lichtleiter (11) oder dem Lichtleiterbündel zumindest ein Teil des von der Lichtquelle (10) emittierten Lichtes zu der Prüffläche (22) hinführbar ist, und dass mit der Sonde (12) und dem Lichtleiter (11) oder dem Lichtleiterbündel zumindest ein Teil des von der Prüffläche (22) reflektierten Lichtes zu dem optischen Spektrometer (13) hinführbar ist.

5. Vorrichtung nach einem der vorangehenden Ansprüche, **dadurch gekennzeichnet, dass** die Sonde (12) einen Umlenkspiegel aufweist.

6. Vorrichtung nach einem der vorangehenden Ansprüche, **dadurch gekennzeichnet, dass** mit dem optischen Spektrometer (13) das diesem zugeführte Licht hinsichtlich Intensität als Funktion der Wellenlänge, insbesondere im Wellenlängenbereich von 200 nm bis 800 nm, analysierbar ist.

7. Vorrichtung nach einem der vorangehenden Ansprüche, **dadurch gekennzeichnet, dass** die Lichtquelle (10) eine UV-Quelle oder eine Lichtquelle mit einem breitbandigen Emissionsspektrum von insbesondere 200 nm bis 800 nm Wellenlänge ist.

8. Vorrichtung nach einem der vorangehenden Ansprüche, **dadurch gekennzeichnet, dass** mittels der Auswerteeinheit (14) aus dem von dem optischen Spektrometer (13) detektierte Spektrum der Lichtintensität als Funktion der Wellenlänge das Material der Prüffläche (22), insbesondere Gold, Silber, Aluminium, Nickel oder Zinn, bestimmbar ist.

9. Verwendung der Vorrichtung nach einem der vorangehenden Ansprüche zur Unterscheidung der Materialien Gold, Aluminium, Nickel, Silber oder Zinn auf Steckkontakten (21) oder Anschlusskontaktflächen, insbesondere von Sensoren, Zündkerzen oder Steckern (20).
